# EUROPÄISCHE PATENTANMELDUNG

(11) **EP 0 619 353 A2**
(43) Veröffentlichungstag der Anmeldung: **12.10.1994**
(21) Anmeldenummer: 94101005.0
(22) Anmeldetag: 25.01.1994
(51) Int. Cl.: C09J 11/00, C09J 101/28

(54) **Klebstoff zur Befestigung von Hartstoffvliesen auf metallischen Unterlagen**

(30) Priorität: 03.04.1993 DE 4311075
(71) Anmelder: Degussa Aktiengesellschaft, D-60311 Frankfurt (DE)
(72) Erfinder: Weise, Wolfgang, Dr., D-60318 Frankfurt (DE); Manegold, Gerd, Dipl.-Ing., D-63457 Hanau (DE); Peter, Willi, D-63825 Blankenbach (DE); Pfeifer, Stefan, Dr., D-61352 Bad Homburg (DE); Starz, Karl, Dr., D-63517 Rodenbach (DE)

(57) **Zusammenfassung**

Zur Befestigung von flexiblen Kunststoffvliesen, die Hartmetalle und Lotpulver enthalten, auf metallischen Unterlagen werden Klebstoffe aus Ethylacetat verwendet, die 5 bis 25 Gew.% Ethylzellulose, 0,1 bis 10 Gew.% Phenolharz, 0 bis 3 Gew.% SiO₂ und/oder B₂O₃ und 0 bis 5 Gew.% eines Weichmachers enthalten. Diese Klebstoffe haften auch noch beim Aufheizen bis über 1000^{o} C und hinterlassen beim Zersetzen nur geringe Kohlenstoffmengen.

## Beschreibung

Die Erfindung betrifft einen Klebstoff zur Befestigung von flexiblen Formkörpern aus Kunststoffen, die Hartstoffe und/oder Lotpulver enthalten, auf metallischen Unterlagen vor dem Aufschmelzen der Lotpulver.

Aus der EP-PS 0 276 581 ist ein Verfahren zur Herstellung von verschleißfesten Hartstoffschichten auf metallischen Unterlagen bekannt, bei dem flexible Formkörper aus Kunststoffen, die große Mengen an Hartstoffpulvern und Lotpulvern enthalten, auf die Unterlagen aufgebracht und durch Erhitzen auf die Arbeitstemperaturen der verwendeten Lote unter Zersetzung der Kunststoffe aufgelötet werden. Dabei können die flexiblen Formkörper die Hartstoff- und Lotpulver gemeinsam oder getrennt enthalten. Typischerweise sind diese Formteile 0,5 bis 3 mm dick.

Vorzugsweise wird auf die zu beschichtende metallische Unterlage zuerst ein Kunststofformteil aufgelegt, das nur Hartstoffpulver enthält und darüber ein Formteil, das nur Lotpulver enthält. Dieses Lotformteil ist in Dicke und Füllgrad an Lotpulver auf das Hartstofformteil so abgestimmt,
daß beim Aufschmelzen des Lotpulvers das Porenvolumen des vom Kunststoffanteil ausgebrannten Hartstofformteils infiltriert und gleichzeitig auf der Unterlage aufgelötet wird.

Bei komplizierten Formen der metallischen Unterlage, bei geneigten oder gekrümmten Flächen ist es notwendig, die Kunststofformkörper mit einem Klebstoff auf der Unterlage zu befestigen, wofür man jedoch spezielle Kleber benötigt.

Übliche Klebstoffe auf organischer Basis können eine Haftung in der Regel nur bis zu ihrer thermischen Zersetzung bei Temperaturen von etwa 300-400^{o} C aufrecht erhalten. Bei höheren Temperaturen zersetzen sich die organischen Bestandteile und es bleibt als Crackprodukt Restkohlenstoff zurück, wie z.B. beim Einsatz von Epoxid-, Furan- und Phenolharzen. Dieser Restkohlenstoff ist jedoch nicht in der Lage, die aufgeklebten Hartstoff- und Lotformkörper bis zu Temperaturen wesentlich über 600^{o} C festzuhalten. Um aber ein Festlöten der Hartstoffschichten mit den verwendeten Hartloten zu ermöglichen, sind häufig Löttemperaturen von 1000^{o} C und mehr erforderlich. Hohe Mengen an Restkohlenstoff erschweren zudem die Verbindung von Hartstoffschicht und Substrat durch das Lot.

Ähnliche Probleme treten beim Einsatz anorganischer Klebstoffe, wie z.B. Wasserglas auf. Die verbleibenden anorganischen Reste reagieren mit dem Lot und verhindern das Zustandekommen eines ausreichenden Lotverbundes zwischen der Hartstoffschicht und dem Grundwerkstoff.

Das gleiche Problem tritt auch beim Einsatz von Glasloten auf.

Es war daher Aufgabe der vorliegenden Erfindung, einen Klebstoff zur Befestigung von flexiblen Formkörpern aus Kunststoffen, die Hartstoffe und/oder Lotpulver enthalten, auf metallischen Unterlagen vor dem Aufschmelzen der Lotpulver zu entwickeln, wobei der Klebstoff eine ausreichende Haftfestigkeit bis 1000^{o} C gewährleisten muß und bei der thermischen Zersetzung des Klebstoffs keine größeren Mengen an Kohlenstoff entstehen dürfen. Außerdem muß dieser Klebstoff schnell antrocknen.

Diese Aufgabe wird erfindungsgemäß gelöst mit einem Klebstoff, der aus 57 bis 94,9 Gew.% Ethylacetat, 5 bis 25 Gew.% Ethylzellulose, 0,1 bis 10 Gew.% Phenolharz, 0 bis 3 Gew.% Siliziumdioxid- und/oder Boroxidpulver und 0 bis 5 Gew.% eines Weichmachers besteht.

Vorzugsweise enthält der Klebstoff 62 bis 94,8 Gew.% Ethylacetat, 5 bis 25 Gew.% Ehtylzellulose, 0,1 bis 10 Gew.% Phenolharz und wahlweise 0,1 bis 3 Gew.% Siliziumdioxid und Boroxidpulver oder 0,1 bis 5 Gew.% eines bekannten Weichmachers.

Bewährt haben sich Klebstoff, die neben Ethylacetat 10 bis 20 Gew.% Ethylzellulose, 0,5 bis 5 Gew.% Phenolharz und wahlweise 0,5 bis 2 Gew.% SiO₂ - und/oder B₂O₃-pulver, oder 0,5 bis 5 Gew.% eines Weichmachers und 0 bis 3 Gew.% SiO₂-Pulver enthalten.

Besonders bewährt haben sich Klebstoffe, die neben Ethyylacetat 12 bis 16 Gew.% Ethylzellulose, 1 bis 5 Gew.% Phenolharz und wahlweise 0,5 bis 1,5 Gew.% SiO₂- und/oder B₂O₃-Pulver, oder 1 bis 4 Gew.% eines Weichmachers und 0 bis 1 Gew.% SiO₂-pulver enthalten.

Diese Klebstoffe gewähren eine ausreichende Haftfestigkeit der aufgeklebten Kunststoffformkörper auf den metallischen Unterlagen bis zu Temperaturen oberhalb 1000^{o} C bei Aufheizraten von über 50^{o} C pro Minute. Außerdem entstehen bei der thermischen Zersetzung nur geringe Kohlenstoffmengen, die das Lötverhalten und die Festigkeit der Lotverbindung nur unwesentlich beeinträchtigen.

Folgende Klebstoffzusammensetzungen haben sich beispielsweise gut bewährt:
a) 82 Gew. % Ehtylacetat, 14 Gew.% Ethylzellulose (ECT 10), 3 Gew. % Phenolharz (Bakelite 100 und 8656F) und 1 Gew.% feinteiliges SiO₂;
b) 80,3 Gew.% Ethylacetat, 13,6 Gew.% Ethylzhellulose (ECT 10), 2,8 Gew.% Phenolharz (Bakelite 100 und 8656F) und 3,3 Gew. % Weicvhmacher (DOA);
c) 82 Gew.% Ethylacetat, 14 Gew.% Ethylzellulose, 3 Gew.% Phenolharz, 0,5 Gew.% SiO₂-Pulver und 0,5 Gew.% B₂O₃-Pulver.

Als Ethylacetat wird handelsübliches Ethylacetat technischer Reinheit eingesetzt, als Ethylzellulose vorzugsweise Produkte mit einem Ethoxylgehalt von etwa 50 %.

Für den Phenolharzanteil haben sich Mischungen von Kresol-Resol-Typen und Phenol-Novolak bewährt, mit möglichst geringem Gehalt an freiem Phenol bzw. Kresol. Als Weichmacher sind Di-octyl-adipate (DOA) geignet.

Mit diesen Klebstoffen lassen sich flexible Kunststoffvliese, die Hartstoff- und/oder Lotpulver in größeren Mengen enthalten, beispielsweise auf die Außenfläche eines Rohres mit 25 mm Durchmesser aufkleben. Die Klebstoffe trocknen bei Normaltemperatur innerhalb weniger Minuten. Diese Rohre können in einem Durchlaufofen mit Aufheizraten von beispielsweise 70^{o} C/min auf eine Löttemperatur von 1050^{o} C aufgeheizt werden, ohne daß die Bindung zwischen Rohr und Kunststoffvliesen verloren geht. Das Lot lötet die Hartstoffschicht auf dem Rohr fest, wobei die Haftfestigkeit durch die Klebstoffreste nicht merkbar beinträchtigt wird.

## Patentansprüche

1. Klebstoff zur Befestigung von flexiblen Formkörpern aus Kunststoffen, die Hartstoffe und/oder Lotpulver enthalten, auf metallischen Unterlagen vor dem Aufschmelzen der Lotpulver,
**dadurch gekennzeichnet**,
daß er aus 57 bis 94,9 Gew.% Ethylacetat, 5 bis 25 Gew.% Ethylzellulose, 0,1 bis 10 Gew.% Phenolharz, 0 bis 3 Gew.% Siliziumdioxid und/oder Boroxidpulver und 0 bis 5 Gew.% eines Weichmachers besteht.

2. Klebstoff nach Anspruch 1,
**dadurch gekennzeichnet**,
daß er aus 62 bis 94,8 Gew.% Ethylacetat, 5 bis 25 Gew.% Ethylzellulose, 0,1 bis 10 Gew.% Phenolharz und 0, 1 bis 3 Gew.% Siliziumdioxid- und/oder Boroxidpulver besteht.

3. Klebstoff nach Anspruch 1,
**dadurch gekennzeichnet**,
daß er aus 62 bis 94,8 Gew.% Ehtylacetat, 5 bis 25 Gew.% Ethylzellulose, 0,1 bis 10 Gew.% Phenolharz und 0,1 bis 5 Gew.% Weichmachers besteht.

4. Klebstoff nach Anspruch 1 oder 2,
**dadurch gekennzeichnet**,
daß er 10 bis 20 Gew.% Ethylzellulose, 0,5 bis 5 Gew.% Phenolharz und 0,5 bis 2 Gew.% Siliziumdioxid- und/oder Boroxidpulver, Rest Ethylacetat, enthält.

5. Klebstoff nach Anspruch 1 oder 3,
**dadurch gekennzeichnet**,
daß er 10 bis 20 Gew.% Ethylzellulose, 0,5 bis 5 Gew.% Phenolharz, 0,5 bis 5 Gew.% eines Weichmachers und 0 bis 3 Gew.% Siliziumdioxidpulver, Rest Ethylacetat, enthält.
